# EUROPEAN PATENT SPECIFICATION

(11) **EP 2 950 638 B1**
(45) Date of publication and mention of the grant of the patent: **12.07.2017**
(21) Application number: 14702961.5
(22) Date of filing: 28.01.2014
(51) Int. Cl.: A01K 5/00, A01B 59/042, A01K 5/02, B62D 53/08, B62D 53/12

(54) **A METHOD FOR PROVIDING FEED TO CATTLE, A COMBINATION OF A TRACTOR VEHICLE OR CONTROL MEANS AND A MIXER FEEDER, AS WELL AS A MIXER FEEDER AND A TRACTOR VEHICLE AS SUCH**
VERFAHREN ZUR FUTTERVERSORGUNG VON VIEH, KOMBINATION EINES TRAKTORS ODER EINER STEUERUNGSVORRICHTUNG UND MISCHERZUFÜHRVORRICHTUNG, SOWIE MISCHERZUFÜHRVORRICHTUNG UND TRAKTOR
PROCÉDÉ POUR FOURNIR DE LA NOURRITURE À DU BÉTAIL, COMBINAISON D'UN VÉHICULE TRACTEUR OU D'UN MOYEN DE COMMANDE ET D'UN DISTRIBUTEUR-MÉLANGEUR, AINSI QU'UN DISTRIBUTEUR-MÉLANGEUR ET UN VÉHICULE TRACTEUR

(30) Priority: 01.02.2013 NL 2010231
(43) Date of publication of application: 09.12.2015
(73) Proprietor: PEETERS LANDBOUWMACHINES B.V., 4879 NE Etten-Leur (NL)
(72) Inventor: PEETERS, Daniel Petrus Marie, B-2920 Nieuwmoer-Kalmthout (BE)
(74) Representative: Algemeen Octrooi- en Merkenbureau B.V.
(86) International application number: PCT/NL2014/050044
(87) International publication number: WO 2014/120000

(56) References cited:
- EP-A1- 1 527 666
- EP-A1- 1 769 949
- EP-A1- 2 204 088
- NL-A- 2 008 365
- NL-A- 8 004 277
- US-A- 3 321 215
- US-A- 3 993 325

## Description

The present invention provides a method for providing feed to cattle. Within this context it is known for a tractor vehicle, typically a tractor, to move a mixer feeder, such as depicted in document NL-A-8004277, coupled to the tractor vehicle to a feed storage location somewhere on a farmyard of a cattle farm. Once arrived at said location, the mixer feeder is loaded, using a second vehicle provided with loading means, such as typically a scoop. Feed is picked up from the feed storage location by the loading means and, after the second vehicle has been moved to the mixer feeder, deposited in the tub of the mixer feeder. While the tub is being loaded with feed, one mixing element or a number of mixing elements, typically augers, in the tub are already rotatably driven by the drive unit of the tractor vehicle, which is coupled to the mixer feeder, which does not have its own independent drive unit, via a so-called power takeoff (PTO). Once loading of the tub is complete, the tractor vehicle drives to a cattle location, typically a stable, on the cattle farm. During this movement, the mixing elements can continue to operate, which is often the case in practice. After the feed in the tub has been sufficiently mixed and cut, the mixer feeder is moved past the cattle by the tractor vehicle, during which movement the feed is ejected from the tub via an open door in the tub wall by the rotating mixing elements and thus presented to the cattle. Document EP-A-1527666 discloses a system for quickly coupling a mounted implement and a towed implement to a tractor frame. The known method has the drawback that two vehicles are needed to carry out the method, whilst in addition two persons are often involved in carrying out the method. The object of the present invention is to reduce the number of required vehicles to one, whilst furthermore only one person is needed for carrying out the method. In order to achieve that object, the method according to the invention comprises the successive steps as specified in claims 1. The invention thus makes use of one and the same vehicle both for moving the mixer feeder and for loading the same. As a result, the method can be carried out by a single person. In addition, a considerable saving can be achieved as regards the cost of the required energy.

In order to be able to stably position the mixer feeder after it has been uncoupled from the vehicle, in particular if the mixer feeder itself is a single-axle vehicle, the mixer feeder comprises at least one support element as well as drive means for said at least one support element, the method comprising the step of controlling the drive means for said at least one support element via the control means during or prior to step B for stably positioning the mixer feeder on a ground surface as a result of the mixer feeder being supported by said at least one support element after being uncoupled according to step B. The person in question can thus readily and quickly ensure that the mixer feeder will be stably and independently positioned after being uncoupled from the vehicle.

A very advantageous preferred embodiment is obtained if the mixer feeder comprises drive means for the at least one mixing element, the method comprising the step of controlling, via control means, the drive means for the at least one mixing element to be operative during at least part of step C. By providing the mixer feeder with its own drive means for the at least one mixing element, the at least one mixing element can operate while the mixer feeder is uncoupled from the vehicle. As a result, the waiting time for step F that may exist, because this step cannot be carried out until the feed in the tub has been sufficiently cut and mixed, will be shorter than in the situation where the mixing elements can only operate when the mixer feeder is connected to the vehicle.

If the mixer feeder comprises detection means for detecting whether loading of the tub with feed is taking place, which detection means are designed for delivering control signals to the drive means for the at least one mixing element, wherein the method comprises the step of the detection means delivering a control signal to the drive means for the at least one mixing element in dependence on detections made by the detection means, the advantage is obtained that the drive means can be used in a very efficient manner with a limited energy consumption.

Advantageously, the coupling means comprise drive means for coupling elements of the coupling means, wherein the method comprises the step of controlling the drive means for the coupling means via control means during step B. Thus, the person in question only needs to spend a minimum amount of time on this step and need not necessarily get off the vehicle.

The tractor vehicle and its driver can be quickly made available for other activities when the mixer feeder is uncoupled from the tractor vehicle between steps E and F.

It is furthermore preferable in that regard if the mixer feeder, after being uncoupled between steps E and F, is connected to a rail system extending through the cattle location, along which rail system the mixer feeder moves through the location during step F.

The invention also relates to a combination of a tractor vehicle and a mixer feeder as defined in claim 6 for use in a method according to the invention as described in the foregoing, whether or not in preferred embodiments thereof. With such a combination, the coupling and uncoupling of the tractor vehicle and the mixer feeder can be carried out within a limited amount of time by a person in question.

Preferably, the coupling means comprise a turntable provided on the tractor vehicle, as well as a coupling pin provided on the mixer feeder, which turntable and which coupling pin are designed for coupling engagement with each other.

According to another special embodiment, the tractor vehicle comprises moving means for moving the turntable between a front position and a rear position relative to a rear axle of the vehicle. In the front position, the driver of the tractor vehicle will have a good view of the turntable and, in addition, the central axis can be positioned close to or even directly above the rear axle of the tractor vehicle, seen in top plan view. By moving the turntable toward the rear position, space can be created for the loading means, for example for the pivoting movement of a loading arm thereof.

An advantageous embodiment is obtained if the moving means comprise a slide on which the turntable is provided.

If the loading means comprise a pivotable loading arm as already discussed in the foregoing, with a scoop provided at the end thereof, it is preferable that the moving means comprise a transmission between the pivot arm and the turntable for causing the turntable to take up the front position in a downwardly pivoted position of the pivot arm and causing the turntable to take up the rear position in an upwardly pivoted position of the pivot arm. In this way a separate driving gear for the moving means is not needed.

A constructionally simple embodiment for realising this can be obtained if the transmission comprises an elongate coupling element which is pivotally connected to the pivot arm at one end and which is pivotally connected to the turntable, or at least to a part of the vehicle that can move along with the turntable between the front position and the rear position, with an opposite end.

Advantageously, the distance between the front position and the rear position is at most 75 cm, more preferably at least 25 cm. In order to have a good view of the coupling means from the driver's position of the vehicle of the combination, so that especially coupling will be relatively easy, it is advantageous if, seen in top plan view, the central axis of the coupling pin is located at most 75 cm, more preferably at most 60 cm, behind the central axis of rear wheels of the tractor vehicle, in the coupled condition, at least in a front position of the coupling element, and/or if the turntable is positioned at least above the tyres of the rear wheels of the tractor vehicle.

The mixer feeder comprises drive means for driving the at least one mixing element, wherein the drive means for driving the mixing elements furthermore preferably comprise at least one electric motor.

For the power supply to the electric motor, or in general to the drive means, it is highly preferable that the drive means for driving the mixing elements comprise storage means for the storage of electrical energy, which storage means form part of the mixer feeder. Concretely, such storage means can be formed by batteries or battery packs capable of supplying a (joint) voltage of at least 320 Volt.

To enable maintenance or replacement of the storage means, the mixer feeder preferably comprises slide means for sliding the storage means, or at least part thereof, out from below the bottom of the tub. That is, the storage means can be made accessible in a simple manner, viz. by being slid out.

A highly advantageous position for the storage means is obtained is they are provided under the bottom of the tub. In practice, the centre of gravity of a mixer feeder is thus lowered, which has a positive effect on the stability of the mixer feeder.

From the viewpoint of user-friendliness, but also from the viewpoint of achieving an optimally efficient use of the mixer feeder and the drive means used for the at least one mixing element, it is advantageous if the mixer feeder is provided with detection means for detecting whether loading of the tub with feed is taking place, wherein the detection means are designed for delivering control signals to the drive means for the at least one mixing element. The mixer feeder comprises at least one support element as well as drive means for the at least one support element, which at least one support element is designed for stably positioning the uncoupled mixer feeder on a ground surface in the operative condition of the at least one support element as a result of the mixer feeder being supported by said at least one support element.

To increase the ease of use, the combination comprises control means for delivering control signals to the drive means for the coupling means, to the drive means for the at least one mixing element, and/or to the drive means for the at least one support element.

Such control means are preferably designed for delivering wireless control signals.

The present invention further provides a combination of control means and a mixer feeder for use in a combination of a tractor vehicle and a mixer feeder according to the invention as described in the foregoing. The control means are preferably of the tablet type, comprising a touchscreen on which information can furthermore be displayed.

The invention also provides a mixer feeder as such and a tractor vehicle as such for use in a combination of a tractor vehicle and a mixer feeder according to the invention as described in the foregoing.

### Description of the figures.

The present invention will now be explained in more detail by means of a description of a possible embodiment thereof, in which reference is made to the following figures.
Figure 1 is a top plan view of a part of a cattle farm;
Figure 2 shows a combination of a tractor vehicle and a mixer-feeder in coupled condition;
Figure 3 shows the combination of figure 2, just uncoupled;
Figure 4 shows the combination of figure 2, in which the tractor vehicle is loading the mixer feeder;
Figure 5 shows the combination of figure 2 shortly before the coupling of the tractor vehicle and the mixer feeder;
Figure 6 is a top plan view of the combination of figure 4;
Figure 7 is a top plan view of the combination of figure 2;

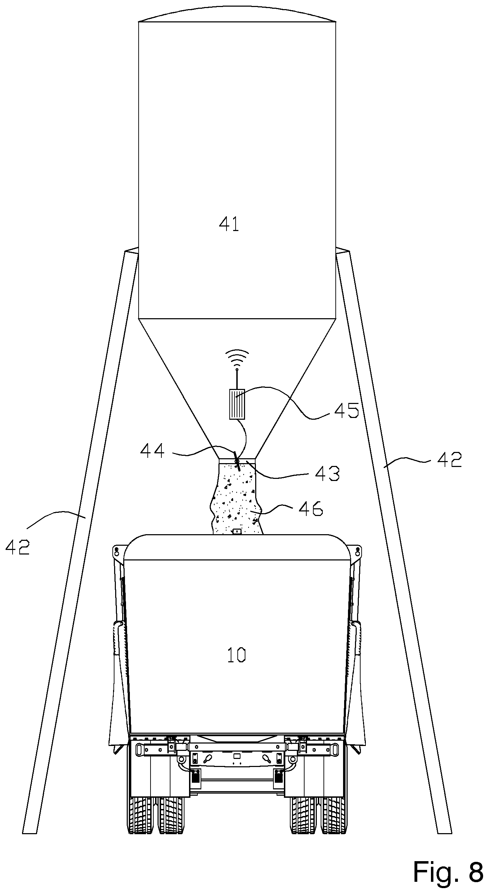

Figure 8 is a rear view of the mixer feeder positioned under a silo;
Figure 9 is a rear view of the mixer feeder;
Figure 10 is a partially transparent top plan view of the mixer feeder of figure 9;
Figure 11 is a top plan view of a stable with a mixer feeder uncoupled from the tractor vehicle;
Figure 12 is a side view of the mixer feeder of figure 11.

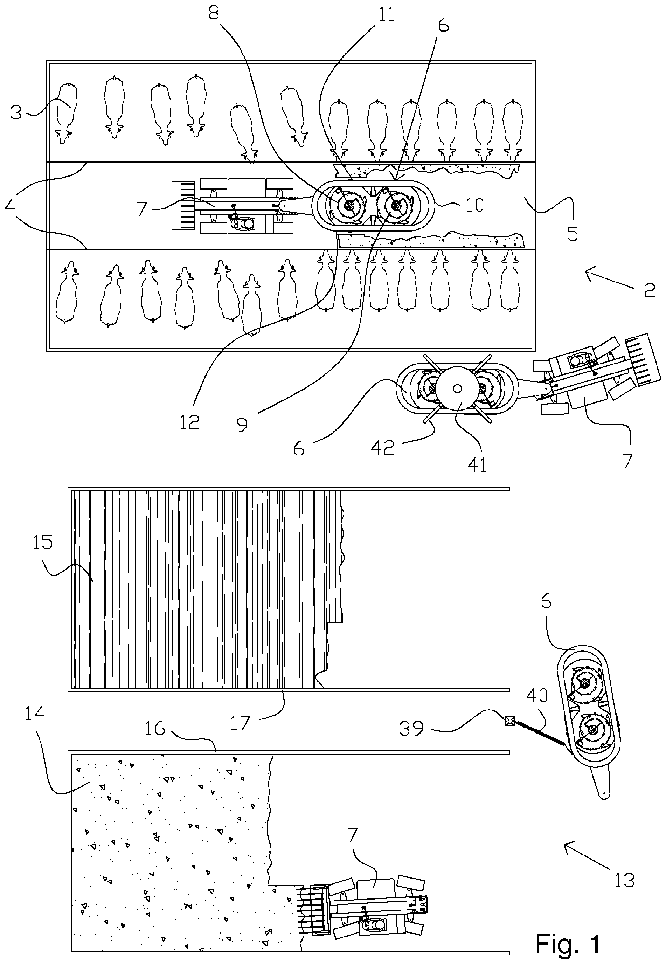

The cattle farm 1 shown in figure 1 comprises a stable 2 for cattle, cows 3 in this example. Disposed in the stable 2 are two parallel railings 4, on the outer sides of which the cows 3 are present, which railings define an aisle 5 between them. As is shown at the top of figure 1, and as known per se, a mixer feeder 6 is moved past the cows 3 by a tractor vehicle 7 for feeding the cows 3.

The mixer feeder 6 is of a type that is known per se. It is a single-axle vehicle comprising two vertical augers 8, 9, which are provided in a tub 10 of the mixer feeder 6. As will be explained in more detail yet hereinafter, the mixer feeder 6 is different from the usual trailer mixer feeders 6 as regards the type of drive means for the augers 8, 9. By opening unloading doors 12, 12 provided in the wall of the tub 10 on either side of the tub and activating the augers 8, 9, feed is deposited in the aisle 5, on the inner sides of the railings 4, via the opened unloading doors 11, 12 during movement of the mixer feeder 6 through the aisle 5 for thus presenting the feed to the cows 3.

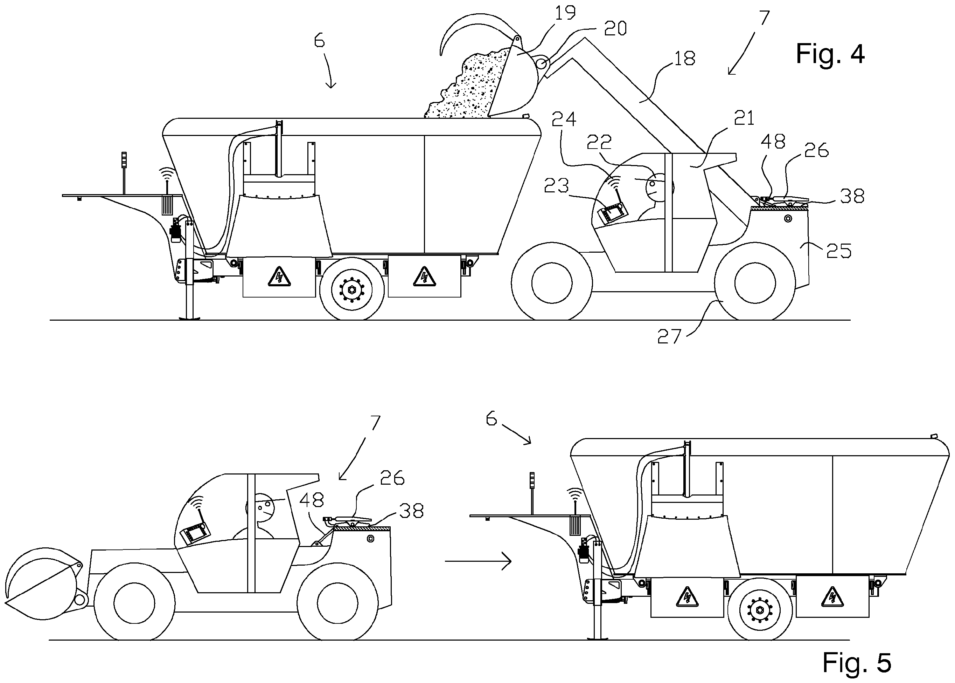

The tractor vehicle 7 is a so-called telehandler, which is provided with loading means comprising an arm 18 with a scoop 19 (see also figure 4) at the front end thereof. The arm extends in the middle of the width of the telehandler 7 and is pivotable about a pivot axis provided at the rear of the telehandler 7. The scoop 19 is pivotally connected about a pivot axis 20 to the arm 18. The telehandler 7 further has a cabin 21 for a driver 22, for whom a control panel 23 is provided inside the cabin 21. The control panel 23 may be a tablet-like control panel, for example, designed for delivering wireless control signals 24 to drive means yet to be specified. At the rear side, the telehandler 7 is provided with a housing 25, within which the internal combustion engine, for example, or parts of the driving gear for the arm 18 and/or the scoop 19 of the telehandler are disposed.

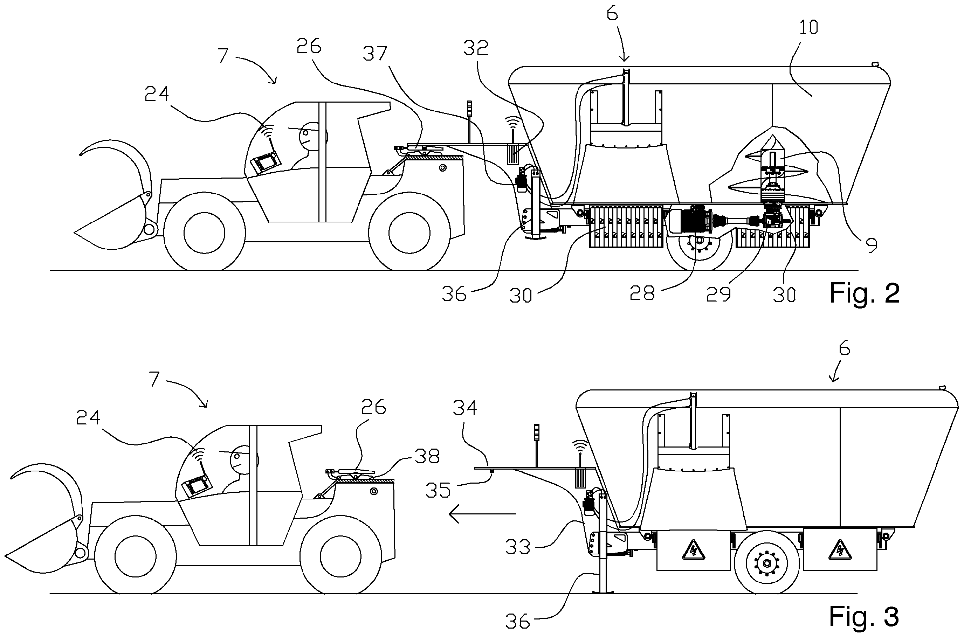

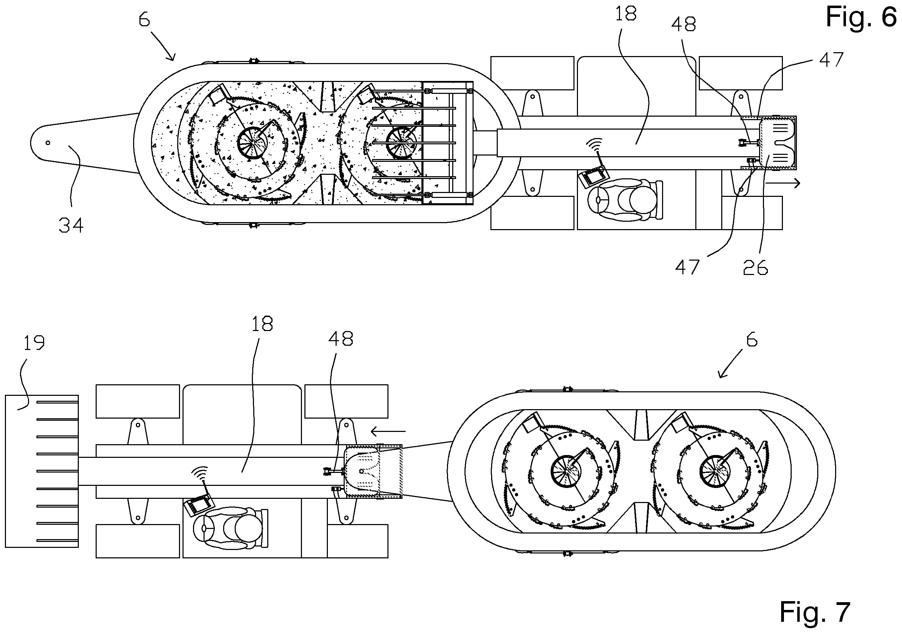

Mounted on the housing 25 is a turntable 26 as known per se for trailer tractors. Such a turntable 26 is also referred to as "fifth wheel". A special feature is the fact that in this case the turntable 26 is mounted on a vehicle provided with loading means. Another special feature is the fact that the turntable 26 is mounted on a slide 38 which can move along guides 47, parallel to the driving direction of the vehicle 7, between a front position (see figures 2, 3, 5 and 7) and a rear position (see figures 4 and 6), as shown in figures 6 and 7. To make it possible to move the slide 38, the slide is pivotally connected to the arm 18 via the operating rod 48. Because of this connection, the slide 38, and thus the turntable 26, will be in the front position when the arm is in the horizontal position shown in figures 2 and 3, for example, whilst the slide 38 and the turntable 26 will take up the rear position when the arm 18 has been pivoted upward as shown in figure 4.

In the front position of the turntable 26, the vertical axis of the turntable 26 is spaced from the axis of the rear wheels 27 of the telehandler by a distance I, whilst (the middle of the height of) the turntable 26 (both in the front position and in the rear position of the turntable 26) is located above the tyres of the rear wheels 27. In order to obtain an advantageous axle load, the distance I preferably equals 0 cm. It is in any case preferable that the distance I does not exceed 75 cm, for example being about 50 centimetres. An important additional advantage of limiting the distance I is that this provides the driver 22 with a good view of the turntable 26.

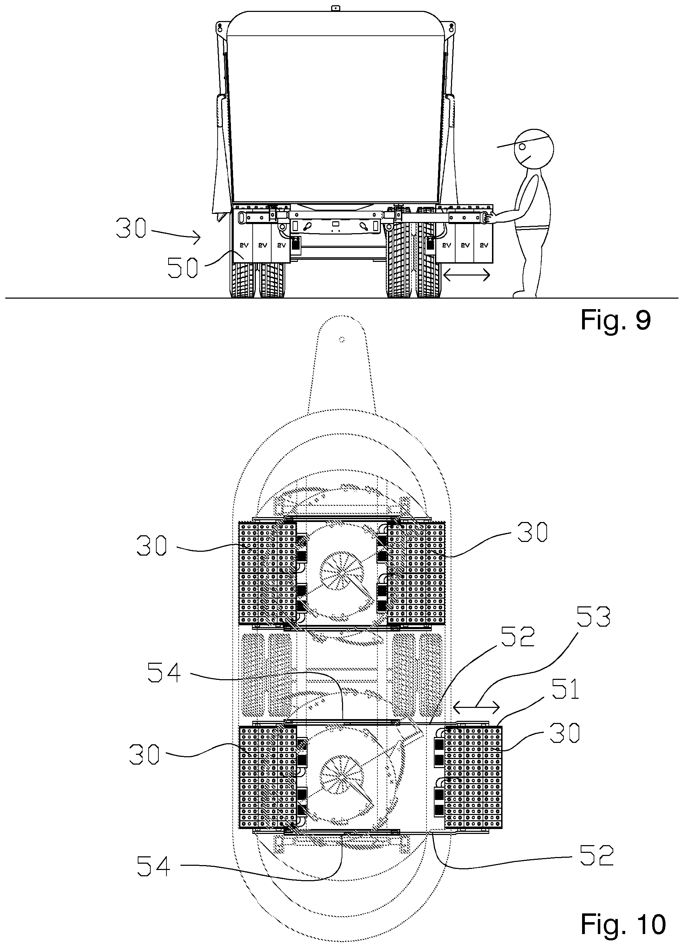

The mixer feeder 6 comprises drive means for the augers 8, 9. Said drive means comprise a frequency-controlled electric motor 28, which is connected to an associated auger 8, 9 via a right-angled transmission 29 for rotatably driving the auger 8, 9 in question about its axis. The drive means for the augers 8, 9 further comprise storage means for the storage and delivery of electrical energy. The storage means comprise four (see also figure 10) series-connected battery packs 30, which each deliver a voltage of 96 Volt and which are each in turn built up of a number of series-connected batteries 50, for example 48 2V batteries. The joint voltage of the storage means is thus more than 380 Volt. With such a voltage, the electric motor 28 can be fed with sufficient power, for example a few dozen kilowatt (KW), for example 60 KW, for driving the augers 8, 9 for mixing feed in the tub 10.

As is shown not only in figure 2 but also in figure 9, the battery packs are housed in battery containers 51, which are provided under the bottom of the tub 10. As is clearly shown in figure 10, two battery packs 30 are provided in front of the single axle of the vehicle 7 and two battery packs 30 are provided behind said axle. Viewed differently, two battery packs 30 are provided on the left-hand side and two battery packs 30 are provided on the right-hand side of the vehicle. Viewed from yet another angle, the battery packs are arranged in pairs on opposite sides of the augers 8, 9. The bottom of the tub 10 functions as a cover for the battery containers 51. The battery containers 51 are provided with sliding arms 52 at the end thereof, which can move forward and backward relative to the guides 54 as indicated by the double arrow 53. The battery containers are thus movable between a position under the bottom of the tub 10 and an extended position (right-hand bottom corner in figure 10). In the extended position, the battery pack 30 in question can be accessed for maintenance or replacement or the like.

The drive means for the augers 8, 9 also comprise a control cabinet 32 which is designed for receiving signals such as the wireless control signals 24 from the control panel 23 on the one hand and delivering control systems to, inter alia, the electric motor 28 on the other hand.

At the front side, the mixer feeder 6 is provided with a swan neck 33 having a forwardly extending horizontal end 34, which is provided with a downwardly extending coupling pin 35 at the bottom side thereof. The coupling pin 35 of the mixer feeder 6 and the turntable 26 of the telehandler 7 are designed for coupling interaction. The turntable 26 is to that end also provided with a locking mechanism, which can be operated by the driver 22 from the cabin 21, for example via the control panel 23.

The mixer feeder 6 further comprises a telescopic support leg 36 on either side of the swan neck 33, as well as drive means for the telescopic movement of the support legs 36. Said drive means comprise a hydraulic pump 37, which can be supplied with electric power by the storage means. The hydraulic pump 37 is connected to the control cabinet 32 for receiving control signals therefrom. The hydraulic pump 37, incidentally, also forms part of the driving gear for the unloading doors 11 and 12.

The mixer feeder 6 further comprises weighing means (not shown), by means of which the weight of the feed in the tab 10 can be determined, on the basis of which determination also the moment of supplying feed to the tub 10 can be determined. The weighing means are designed for delivering signals to the control cabinet 32. The weighing means are also designed for delivering signals, whether or not of via the control cabinet 32, to a receiver in the cabin 21, which receiver may form part of the control panel 23, for example. The mixer feeder 6 is also provided with a video camera, which wirelessly transmits video signals regarding the contents of the tub 10, which video signals can be received in the cabin 21 for displaying an image of the contents of the tub 10 in the cabin 21, for example on a screen of the control panel 23.

Now the manner in which the tub 10 is loaded with feed will be explained. The tractor 7 to that end hauls the mixer feeder 6 to a non-covered storage location 13 on the cattle farm 1, where feed, or at least components thereof such as grass 14 and maize 15, which is stored within U-shaped (seen in top plan view) walls 16, 17, can be collected. At the storage location 13, the mixer feeder 6 is uncoupled, as shown in figures 2 and 3. To that end, the driver 22 operates the control panel 23 and a wireless control signal 24 is delivered to the control cabinet 32, which subsequently delivers a control signal to the hydraulic pump 37 to lower the support legs 36 until they are supported on the ground surface with their bottom ends and the support legs 36 are locked in this extended position. The driver 22 then operates the control panel 23 to deliver a control signal to the locking means of the turntable 26, so that the locking engagement between the turntable 26 and the coupling pin 35 is released. Subsequently, the telehandler 7 drives forwards and the mixer feeder 6 remains behind at a fixed position.

The telehandler 7 moves to the feed present at the storage location 13 for collecting said feed or at least components thereof. This situation is shown at the bottom of figure 1. Using the scoop 19 the telehandler 7 picks up feed from the storage location 13. The telehandler 7 then drives to the mixer feeder 6 and deposits the pick-up feed in the tub 10 of the mixer feeder, as is shown in figure 4. The weighing means of the mixer feeder 6 detect this loading of the tub 10 and deliver a signal to the control cabinet 32, which in turn delivers a control signal to the electric motor 28 to rotate the augers 8, 9. Making use of the detections made by the weighing means achieves that the augers 8, 9 will not start rotating sooner than is necessary, so that no unnecessary use is made of electrical energy from the storage means.

Alternatively it is also possible to make use of a stationary power source 39, which may be provided at the storage location 13. The power source 39 can be connected to the mixer feeder 6 via a cable 40. The power source 39 can feed power directly to the electric motor 28, so that the electric storage means are not used for this. Furthermore, the electric storage means can be charged by means of the power source 39. At the storage location 13, the telehandler 7 in this way collects feed from the storage location 13 by driving to and fro a number of times, if necessary and loads the tub 10 with desired amounts of desired components. Using the weighing means, it can be registered whether the correct amounts have been loaded. This information is displayed to the driver 22 via a screen in the cabin 21, for example a screen on the control panel 23.

The mixer feeder 6 is then coupled to the telehandler 7 again by reversing the telehandler 7 to the mixer feeder 6, as shown in figure 5, until the coupling pin 35 engages the turntable 26 again and the locking mechanism in the turntable 26 is activated again. For the driver 22, activating the locking mechanism, thereby actually realising the coupling, is a relatively easy operation, since the driver has an excellent view of the turntable 26 from the cabin 21 on account of the relatively high and nearby position thereof. After said coupling has taken place, the driver 22 will operate the control panel 23 to deliver a control signal 24 to the control cabinet 32 for driving the hydraulic pump 37 to retract the support legs 36 again.

Following this, the tractor vehicle 7 moves the mixer feeder 6 to a position under a silo 41, which is supported by legs 42, between which the telehandler 7 and the mixer feeder 6 can pass. The silo 41 is filled with components for the feed that are not suitable, or at least less so, for being stored at the storage location 13. Said components may be concentrates, for example. The silo 41 has an outflow opening 43, where a gate valve 44 is provided. The gate valve 44 can be operated via a control cabinet 43, which is designed for receiving control signals from the control panel 23 on the one hand and for delivering control signals to the gate valve 44 on the other hand.

Once the tub 7 of the mixer feeder 6 is positioned under the outflow opening 43 of the silo 41, the driver 22 will deliver a control signal 24 to the control cabinet 45 by operating the control panel 23, which control cabinet 45, in response thereto, will open the gate valve 44 temporarily to deliver a desired amount of concentrate 46 to the tub 10. Subsequently, the telehandler 7 will drive the mixer feeder 6 to the beginning of the aisle 5. Between the moment of first loading of the tub 10 and the arrival of the mixer feeder 6 at the beginning of the aisle 5, the augers 8, 9 are rotatably driven by the electric motor 28, at least to the extent that sufficient mixing and cutting of the feed in the tub 10 has taken place. The vehicle 7 then drives the mixer feeder 6 through the aisle 5, as already described in the foregoing. A separate electric motor may be provided for each auger 8, 9, if desired.

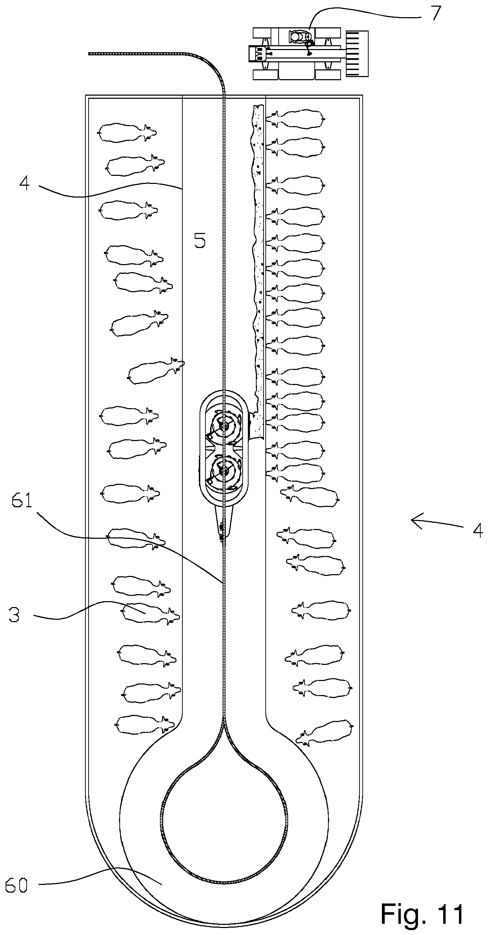

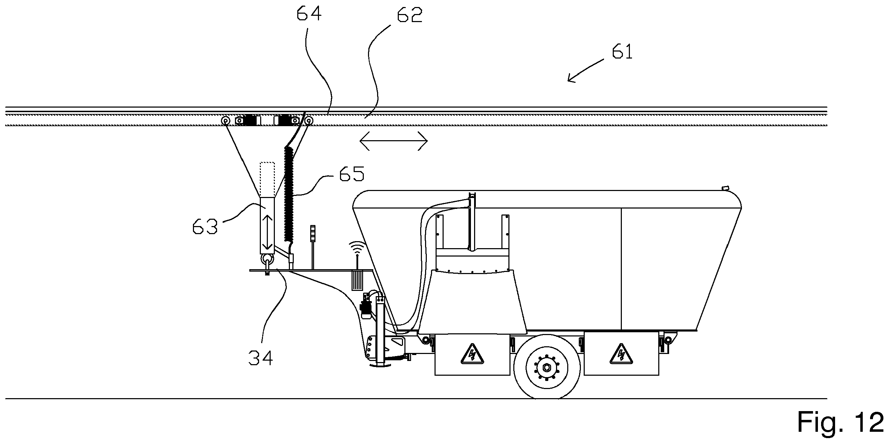

Figures 11 and 12 show an alternative manner of presenting feed to cattle 3. The stable 2 is to that end slightly adapted, but in any case it still has a central aisle 5 on both sides of which the cattle 3 are present behind railings 4. At one end of the aisle 5, a substantially disc-shaped turning space 60 is provided in the stable 2. The stable 2 is furthermore provided with a rail system 61, whose path corresponds to the route to be covered by the mixer feeder 6 in the stable 2. The rail system 61 comprises a guide 62, which functions as a physical guide for the mixer feeder 6. To perform this function, the rail system 61 further comprises a connecting arm 53, which can engage the front horizontal end 34 of the swan neck 33 of the mixer feeder 6, and which, at the upper end thereof, is connected to an elongate driving element (not shown), such as a chain or a cable, which extends along the same path as the guide 62 and which can be driven along the path of the guide 62 by drive means not shown. The rail system 61 further comprises a power supply 64 which can be connected to the mixer feeder 6, for example via slide contacts and via an electric cable 65. This connection makes it possible to connect the electric motor 28 to the power supply 64, so that the battery packs 30 need not be used for driving the augers 8, 9 while the mixer feeder 6 is moving through the stable 2 and may even be recharged.

Using the adapted stable 2 provided with the rail system 61 as described above, the cattle 3 can be automatically provided with feed by uncoupling the mixer feeder 6 from the tractor vehicle 7 outside the stable 2, which tractor vehicle, including its driver, thus becomes available for other duties, and connecting the mixer feeder 6 to the rail system 61. The mixer feeder 6 is then connected to the rail system 61 via the connecting arm 63 and via the power supply 64. The mixer feeder 6 is then drawn forward and backward through the aisle 5 by means of the rail system 61, possibly in a time-controlled manner, on account of the connection to the elongate driving element of the rail system 61, and turned in the turning space 60. The augers 8, 9 are driven via the electric motor 28. The delivery of feed is controlled via control signals to the control cabinet 32, so that no feed is unloaded in the turning space 60, for example, and different amounts of feed are delivered to respective sides of the aisle 5. On account of the forward and backward movement, the feed can be ejected from the tub on one side only; after completion of the forward and backward movement through the stable 2, feed has been presented to all the cattle 3 in the stable 2.

In another alternative, the mixer feeder 6 could be modified in that it is provided with an (additional) electric motor for driving at least one (whether or not additional) wheel of the mixer feeder. The mixer feeder 6 will in that case be moved by means of the additional electric motor. The rail system 61 can be of simpler design in that case, viz. without the elongate driving element and the means specifically associated therewith.

The rail system 61 could also be configured without the power supply 64, in which case the electric motor 28 will be energised by the battery packs 30.

It is also conceivable not to use a rail system 61 or another type of physical guide at all, and to provide the mixer feeder 6 with a steerable wheel, by means of which the mixer feeder 6 can move along a desired path through the stable 2. At least one of the wheels of the mixer feeder would have to be a driven wheel in that case.

Using a control system for the mixer feeder 6, the time, the amount and a desired distribution for unloading feed in a stable 2 can be set.

## Claims

1. A method for providing feed to cattle, comprising the successive steps of
A moving a mixer feeder (6) coupled to a tractive vehicle (7) via coupling means, which mixer feeder comprises a tub (10), at least one mixing element (8, 9) for mixing feed in the tub, at least one support element (36) as well as drive means (37) for said at least one support element, to a storage location for feed, or at any rate for at least one feed component, by means of said vehicle,
B deactivating the coupling means for uncoupling the mixer feeder from the vehicle,
C loading the tub of the mixer feeder with feed, using loading means that form part of the vehicle, wherein the mixer feeder takes up a fixed position and the vehicle moves between the storage location and the mixer feeder,
D activating the coupling means for coupling the mixer feeder to the vehicle,
E moving the mixer feeder to a cattle location where cattle are present by means of the tractor vehicle,
F unloading the mixer feeder at the cattle location for providing feed to the cattle from the tub of the mixer feeder, the method further comprising the step of controlling the drive means for said at least one support element via control means during or prior to step B for stably positioning the mixer feeder on a ground surface as a result of the mixer feeder being supported by said at least one support element after being uncoupled according to step B.

2. A method according to claim 1, wherein the mixer feeder comprises drive means for the at least one mixing element, the method comprising the step of controlling, via control means, the drive means for the at least one mixing element to be operative during at least part of step C.

3. A method according to claim 2, wherein the mixer feeder comprises detection means for detecting whether loading of the tub with feed is taking place, wherein the detection means are designed for delivering control signals to the drive means for the at least one mixing element, the method comprising the step of the detection means delivering a control signal to the drive means for the at least one mixing element in dependence on detections made by the detection means

4. A method according to claims 1 - 3, wherein the coupling means comprise drive means for coupling elements of the coupling means, the method comprising the step of controlling the drive means for the coupling means via control means during step B.

5. A method according to any one of the preceding claims, wherein the mixer feeder is uncoupled from the tractor vehicle between steps E and F and wherein preferably the mixer feeder, after being uncoupled between steps E and F, is connected to a rail system extending through the cattle location, along which rail system the mixer feeder moves through the location during step F.

6. A combination of a tractor vehicle (7) and a mixer feeder (6) for use in a method according to any one of the preceding claims, the combination comprising coupling means for coupling the tractor vehicle to the mixer feeder, and drive means for coupling elements of the coupling means, the tractor vehicle comprising loading means for loading the mixer feeder as well as control means, and the mixer feeder comprising a tub, at least one mixing element for mixing the contents of the tub, at least one support element (36) as well as drive means (6) for the at least one support element, which at least one support element is designed for stably positioning the uncoupled mixer feeder on a ground surface in the operative condition of the at least one support element as a result of the mixer feeder being supported by said at least one support element, wherein the control means are designed to control the drive means for the coupling elements of the coupling means for uncoupling the mixer feeder from the tractor vehicle.

7. A combination according to claim 6, **characterised in that** the combination comprises control means for delivering control signals to the drive means for the coupling means, to the drive means for the at least one mixing element, and/or to the drive means for the at least one support element, the control means preferably being designed for delivering wireless control signals.

8. A combination according to claim 7, **characterised in that** the coupling means comprise a turntable provided on the tractor vehicle, as well as a coupling pin provided on the mixer feeder, which turntable and which coupling pin are designed for coupling engagement with each other the tractor vehicle comprising moving means for moving the turntable between a front position and a rear position relative to a rear axle of the vehicle.

9. A combination according to any one of claims 6 - 8, **characterised in that** the distance between the front position and the rear position ranges between 25 cm and 75 cm and/or **in that**, seen in top plan view, the central axis of the coupling pin is located at most 75 cm behind the central axis of rear wheels of the tractor vehicle, in the coupled condition

10. A combination according to any one of claims 6 - 9, **characterised in that** the mixer feeder comprises drive means for driving the at least one mixing element, which drive means comprise at least one electric motor (28).

11. A combination according to claim 10, **characterised in that** the drive means for driving the mixing elements comprise storage means (30) for the storage of electrical energy, which storage means form part of the mixer feeder.

12. A combination according to any one of claims 6 - 11, **characterised in that** the mixer feeder is provided with detection means for detecting whether loading of the tub with feed is taking place, wherein the detection means are designed for delivering control signals to the drive means for the at least one mixing element.

13. A combination of control means and a mixer feeder for use in a combination of a tractor vehicle and a mixer feeder according to claim 7.

14. A mixer feeder for use in a combination of a tractor vehicle and a mixer feeder according to any one of claims 6 - 12.

15. A tractor vehicle for use in a combination of a tractor vehicle and a mixer feeder according to any one of claims 6 - 12.

## Patentansprüche

1. Verfahren zum Versorgen von Vieh mit Futter, das die nachstehenden, aufeinanderfolgenden Schritte umfasst:
A Bewegen einer Misch- und Zuführvorrichtung (6), die über Kopplungsmittel mit einem Zugfahrzeug (7) verbunden ist, wobei die Misch- und Zuführvorrichtung eine Wanne (10), wenigstens ein Mischelement (8, 9) zum Mischen von Futter in der Wanne, wenigstens ein Stützelement (36) sowie Antriebsmittel (37) für das wenigstens eine Stützelement umfasst, zu einem Futterlagerort oder in einer beliebigen Geschwindigkeit für wenigstens eine Zuführungskomponente mittels des Fahrzeugs,
B Deaktivieren der Kopplungsmittel zum Entkoppeln der Misch- und Zuführvorrichtung von dem Fahrzeug,
C Beladen der Wanne der Misch- und Zuführvorrichtung mit Futter unter Verwendung von Belademitteln, die einen Teil des Fahrzeugs bilden, wobei die Misch- und Zuführvorrichtung eine feste Position einnimmt und das Fahrzeug sich zwischen dem Lagerort und der Misch- und Zuführvorrichtung bewegt,
D Aktivieren des Kopplungsmittels zum Koppeln der Misch- und Zuführvorrichtung mit dem Fahrzeug,
E Bewegen der Misch- und Zuführvorrichtung mittels des Zugfahrzeugs an einen Viehaufenthaltsort, an dem sich Vieh befindet,
F Entladen der Misch- und Zuführvorrichtung an dem Viehaufenthaltsort zum Versorgen von Vieh mit Futter aus der Wanne der Misch- und Zuführvorrichtung,
wobei das Verfahren ferner den Schritt umfasst, dass die Antriebsmittel für das wenigstens eine Stützelement über Steuerungsmittel während oder vor Schritt B gesteuert werden, um die Misch- und Zuführvorrichtung auf einer Bodenfläche stabil zu positionieren, als Folge dessen, dass die Misch- und Zuführvorrichtung von wenigstens einem Stützelement gestützt wird, nachdem sie gemäß Schritt B entkoppelt wurde.

2. Verfahren nach Anspruch 1, wobei die Misch- und Zuführvorrichtung Antriebsmittel für das wenigstens eine Mischelement umfasst, wobei das Verfahren den Schritt der Steuerung der Antriebsmittel für das wenigstens eine Mischelement über Steuerungsmittel umfasst, um wenigstens in einem Teil von Schritt C funktionswirksam zu sein.

3. Verfahren nach Anspruch 2, wobei die Misch- und Zuführvorrichtung Erfassungsmittel zum Erfassen umfasst, ob ein Beladen der Wanne mit Futter stattfindet, wobei die Erfassungsmittel dazu ausgebildet sind, Steuerungssignale an die Antriebsmittel für das wenigstens eine Mischelement zu liefern, wobei das Verfahren den Schritt umfasst, dass die Erfassungsmittel ein Steuerungssignal an die Antriebsmittel für das wenigstens eine Mischelement in Abhängigkeit von den von den Erfassungsmitteln getätigten Erfassungen liefern.

4. Verfahren nach Anspruch 1 bis 3, wobei die Kopplungsmittel Antriebsmittel für Kopplungselemente der Kopplungsmittel umfassen, wobei das Verfahren den Schritt der Steuerung der Antriebsmittel für die Kopplungsmittel über Steuerungsmittel in Schritt B umfasst.

5. Verfahren nach einem der vorhergehenden Ansprüche, wobei die Misch- und Zuführvorrichtung von dem Zugfahrzeug zwischen Schritt E und F entkoppelt wird und wobei die Misch- und Zuführvorrichtung vorzugsweise nach dem Entkoppeln zwischen Schritt E und F mit einem Schienensystem verbunden wird, das durch den Viehaufenthaltsort verläuft, wobei sich die Misch- und Zuführvorrichtung in Schritt F entlang diesem Schienensystem durch den Ort bewegt.

6. Kombination aus einem Zugfahrzeug (7) und einer Misch- und Zuführvorrichtung (6) zur Verwendung in einem Verfahren gemäß einem der vorhergehenden Ansprüche, wobei die Kombination Kopplungsmittel zum Koppeln des Zugfahrzeugs mit der Misch- und Zuführvorrichtung und Antriebsmittel für Kopplungselemente der Kopplungsmittel umfasst, wobei das Zugfahrzeug Belademittel zum Beladen der Misch- und Zuführvorrichtung sowie Steuerungsmittel umfasst, und die Misch- und Zuführvorrichtung eine Wanne, wenigstens ein Mischelement zum Mischen der Inhalte der Wanne, wenigstens ein Stützelement (36) sowie Antriebsmittel (6) für das wenigstens eine Stützelement umfasst, wobei das wenigstens eine Stützelement dazu ausgebildet ist, die entkoppelte Misch- und Zuführvorrichtung auf einer Bodenfläche im Betriebszustand des wenigstens einen Stützelements stabil zu positionieren, als Folge dessen, dass die Misch- und Zuführvorrichtung von dem wenigstens einen Stützelement gehalten wird, wobei die Steuerungsmittel dazu ausgebildet sind, die Antriebsmittel für die Kopplungselemente der Kopplungsmittel zum Entkoppeln der Misch- und Zuführvorrichtung von dem Zugfahrzeug zu steuern.

7. Kombination nach Anspruch 6, **dadurch gekennzeichnet, dass** die Kombination Steuerungsmittel zur Lieferung von Steuersignalen an die Antriebsmittel für die Kopplungsmittel, an die Antriebsmittel für das wenigstens eine Mischelement und/oder an die Antriebsmittel für das wenigstens eine Stützelement umfasst, wobei die Steuerungsmittel vorzugsweise zur Lieferung von Funksteuerungssignalen ausgebildet sind.

8. Kombination nach Anspruch 7, **dadurch gekennzeichnet, dass** die Kopplungsmittel einen an dem Zugfahrzeug vorgesehenen Drehteller sowie einen an der Misch- und Zuführvorrichtung vorgesehenen Kopplungsstift umfassen, wobei der Drehteller und der Kopplungsstift für einen Kopplungseingriff ineinander ausgebildet sind, und das Zugfahrzeug Bewegungsmittel zum Bewegen des Drehtellers zwischen einer vorderen Position und einer hinteren Position bezüglich einer Hinterachse des Fahrzeugs umfasst.

9. Kombination nach einem der Ansprüche 6 bis 8, **dadurch gekennzeichnet, dass** der Abstand zwischen der vorderen Position und der hinteren Position im Bereich zwischen 25 cm und 75 cm liegt, und/oder dass, in einer Draufsicht von oben gesehen, die Mittelachse des Kopplungsstifts in dem gekoppelten Zustand sich maximal 75 cm hinter der Mittelachse der Hinterräder des Zugfahrzeugs befindet.

10. Kombination nach einem der Ansprüche 6 bis 9, **dadurch gekennzeichnet, dass** die Misch- und Zuführvorrichtung Antriebsmittel zum Antreiben des wenigstens einen Mischelements umfasst, wobei die Antriebsmittel wenigstens einen Elektromotor (28) umfassen.

11. Kombination nach Anspruch 10, **dadurch gekennzeichnet, dass** die Antriebsmittel zum Antreiben der Mischelemente Speichermittel (30) zum Speichern elektrischer Energie umfassen, wobei die Speichermittel einen Teil der Misch- und Zuführvorrichtung bilden.

12. Kombination nach einem der Ansprüche 6 bis 11, **dadurch gekennzeichnet, dass** die Misch- und Zuführvorrichtung mit Erfassungsmitteln zum Erfassen vorgesehen ist, ob das Beladen der Wanne mit Futter stattfindet, wobei die Erfassungsmittel zur Lieferung von Steuerungssignalen an die Antriebsmittel für das wenigstens eine Mischelement ausgebildet sind.

13. Kombination aus Steuerungsmitteln und einer Misch- und Zuführvorrichtung zur Verwendung in einer Kombination aus einem Zugfahrzeug und einer Misch- und Zuführvorrichtung nach Anspruch 7.

14. Misch- und Zuführvorrichtung zur Verwendung in Kombination aus einem Zugfahrzeug und einer Misch- und Zuführvorrichtung nach einem der Ansprüche 6 bis 12.

15. Zugfahrzeug zur Verwendung in einer Kombination aus einem Zugfahrzeug und einer Misch- und Zuführvorrichtung nach einem der Ansprüche 6 bis 12.

## Revendications

1. Procédé de fourniture d'aliments au bétail, comprenant les étapes successives consistant
A à déplacer un mélangeur-distributeur (6) couplé à un véhicule tracteur (7) par l'intermédiaire de moyens de couplage, lequel mélangeur-distributeur comprend une cuve (10), au moins un élément de mélange (8, 9) pour mélanger des aliments dans la cuve, au moins un élément de support (36) ainsi que des moyens d'entraînement (37) pour ledit au moins un élément de support, jusqu'à un emplacement de stockage pour aliments, ou en tout cas pour au moins un composant d'aliments, au moyen dudit véhicule,
B à désactiver les moyens de couplage pour découpler le mélangeur-distributeur du véhicule,
C à charger la cuve du mélangeur-distributeur avec des aliments, en utilisant des moyens de chargement qui font partie du véhicule, où le mélangeur-distributeur prend une position fixe et le véhicule se déplace entre l'emplacement de stockage et le mélangeur-distributeur,
D à activer les moyens de couplage pour coupler le mélangeur-distributeur au véhicule,
E à déplacer le mélangeur-distributeur vers un emplacement du bétail où le bétail est présent au moyen du véhicule tracteur,
F à décharger le mélangeur-distributeur à l'emplacement du bétail pour fournir des aliments au bétail depuis la cuve du mélangeur-distributeur,
le procédé comprenant en outre l'étape consistant à commander les moyens d'entraînement pour ledit au moins un élément de support par l'intermédiaire de moyens de commande pendant ou avant l'étape B pour positionner de manière stable le mélangeur-distributeur sur une surface de sol en conséquence du fait que le mélangeur-distributeur soit supporté par ledit au moins un élément de support après avoir été découplé selon l'étape B.

2. Procédé selon la revendication 1, dans lequel le mélangeur-distributeur comprend un moyen d'entraînement pour l'au moins un élément de mélange, le procédé comprenant l'étape consistant à commander, par l'intermédiaire de moyens de commande, les moyens d'entraînement pour que l'au moins un élément de mélange soit opérationnel pendant au moins une partie de l'étape C.

3. Procédé selon la revendication 2, dans lequel le mélangeur-distributeur comprend des moyens de détection pour détecter si le chargement de la cuve avec les aliments a eu lieu, dans lequel les moyens de détection sont conçus pour délivrer des signaux de commande aux moyens d'entraînement pour l'au moins un élément de mélange, le procédé comprenant l'étape consistant à ce que les moyens de détection délivrent un signal de commande aux moyens d'entraînement pour l'au moins un élément de mélange en fonction de détections réalisées par les moyens de détection.

4. Procédé selon les revendications 1 à 3, dans lequel les moyens de couplage comprennent des moyens d'entraînement pour coupler des éléments des moyens de couplage, le procédé comprenant l'étape consistant à commander les moyens d'entraînement pour les moyens de couplage par l'intermédiaire des moyens de commande pendant l'étape B.

5. Procédé selon l'une quelconque des revendications précédentes, dans lequel le mélangeur-distributeur est découplé du véhicule tracteur entre les étapes E et F et, dans lequel de préférence le mélangeur-distributeur, après avoir été découplé entre les étapes E et F, est relié à un système de rail s'étendant à travers l'emplacement du bétail, le long duquel système de rail, le mélangeur-distributeur se déplace à travers l'emplacement pendant l'étape F.

6. Combinaison d'un véhicule tracteur (7) et d'un mélangeur-distributeur (6) pour une utilisation dans un procédé selon l'une quelconque des revendications précédentes, la combinaison comprenant des moyens de couplage pour coupler le véhicule tracteur au mélangeur-distributeur, et des moyens d'entraînement pour coupler des éléments des moyens de couplage, le véhicule tracteur comprenant des moyens de chargement pour charger le mélangeur-distributeur ainsi que des moyens de commande, et le mélangeur-distributeur comprenant une cuve, au moins un élément de mélange pour mélanger le contenu de la cuve, au moins un élément de support (36) ainsi que des moyens d'entraînement (6) pour l'au moins un élément de support, lequel au moins un élément de support est conçu pour positionner de manière stable le mélangeur-distributeur découplé sur une surface de sol dans l'état de fonctionnement de l'au moins un élément de support en conséquence du fait que le mélangeur-distributeur soit supporté par ledit au moins un élément de support, où les moyens de commande sont conçus pour commander les moyens d'entraînement pour les éléments de couplage des moyens de couplage pour découpler le mélangeur-distributeur du véhicule tracteur.

7. Combinaison selon la revendication 6, **caractérisée en ce que** la combinaison comprend des moyens de commande pour délivrer des signaux de commande aux moyens d'entraînement pour les moyens de couplage, aux moyens d'entraînement pour l'au moins un élément de mélange, et/ou aux moyens d'entraînement pour l'au moins un élément de support, les moyens de commande étant de préférence conçus pour délivrer des signaux de commande sans fil.

8. Combinaison selon la revendication 7, **caractérisée en ce que** les moyens de couplage comprennent une plaque tournante prévue sur le véhicule tracteur, ainsi qu'une goupille de couplage prévue sur le mélangeur-distributeur, laquelle plaque tournante et laquelle goupille de couplage sont conçues pour s'engager par couplage l'un(e) avec l'autre, le véhicule tracteur comprenant des moyens de déplacement pour déplacer la plaque tournante entre une position avant et une position arrière par rapport à un essieu arrière du véhicule.

9. Combinaison selon l'une quelconque des revendications 6 à 8, **caractérisée en ce que** la distance entre la position avant et la position arrière est comprise entre 25 cm et 75 cm et/ou **en ce que**, lorsqu'on regarde selon une vue en plan de dessus, l'axe central de la goupille de couplage est situé au plus à 75 cm derrière l'axe central des roues arrière du véhicule tracteur, dans l'état couplé.

10. Combinaison selon l'une quelconque des revendications 6 à 9, **caractérisée en ce que** le mélangeur-distributeur comprend des moyens d'entraînement pour entraîner l'au moins un élément de mélange, lesquels moyens d'entraînement comprennent au moins un moteur électrique (28).

11. Combinaison selon la revendication 10, **caractérisée en ce que** les moyens d'entraînement pour entraîner les éléments de mélange comprennent des moyens de stockage (30) pour le stockage d'énergie électrique, lesquels moyens de stockage font partie du mélangeur-distributeur.

12. Combinaison selon l'une quelconque des revendications 6 à 11, **caractérisée en ce que** le mélangeur-distributeur est muni de moyens de détection pour détecter si le chargement de la cuve avec les aliments a eu lieu, où les moyens de détection sont conçus pour délivrer des signaux de commande aux moyens d'entraînement pour l'au moins un élément de mélange.

13. Combinaison de moyens de commande et d'un mélangeur-distributeur pour une utilisation dans une combinaison d'un véhicule tracteur et d'un mélangeur-distributeur selon la revendication 7.

14. Mélangeur-distributeur pour une utilisation dans une combinaison d'un véhicule tracteur et d'un mélangeur-distributeur selon l'une quelconque des revendications 6 à 12.

15. Véhicule tracteur pour une utilisation dans une combinaison d'un véhicule tracteur et d'un mélangeur-distributeur selon l'une quelconque des revendications 6 à 12.
